# EUROPEAN PATENT SPECIFICATION

(11) **EP 1 156 955 B1**
(45) Date of publication and mention of the grant of the patent: **20.10.2004**
(21) Application number: 00906514.5
(22) Date of filing: 29.02.2000
(51) Int. Cl.: B62B 5/04

(54) **WHEEL HUB**
RADNABE
MOYEU DE ROUE

(30) Priority: 01.03.1999 GB 9904607; 23.07.1999 GB 9917310
(43) Date of publication of application: 28.11.2001
(73) Proprietor: Stedman, Kenneth Brian, Ipswich, Suffolk 1P1 5BN (GB); Warner, Iain Robert, Ipswich, Suffolk 1P5 7JR (GB)
(72) Inventor: Stedman, Kenneth Brian, Ipswich, Suffolk 1P1 5BN (GB); Warner, Iain Robert, Ipswich, Suffolk 1P5 7JR (GB)
(74) Representative: Copp, David Christopher
(86) International application number: PCT/GB2000/000713
(87) International publication number: WO 2000/051870

(56) References cited:
- EP-A- 0 220 734
- US-A- 4 045 047
- US-A- 4 987 978
- US-A- 5 746 437

## Description

This invention relates to a wheel hub, particularly but not exclusively to a hub for a wheelchair wheel.

Wheelchairs are used by physically handicapped people to give them mobility. They are conventionally propelled by the user who rotates handwheels fixed to the road wheels. The handwheels are centred on the axis of rotation of the road wheels. In most cases, the handwheels are rigidly fixed to the road wheels so that one revolution of the hand wheels equates to one revolution of the road wheels.

When the wheelchair is stationary, a brake should be applied to prevent the wheelchair from moving unintentionally. It is known to use brakes which press against the tyre of the road wheel.

EP-A-0 220 734 describes a wheelchair brake comprising a wheel hub according to the preamble of claim 1, which can be set in three different positions. In one position there is no restraint on the wheel which can rotate freely in either direction. In a second position the wheel can only rotate in one (forwards) direction. In the third position, the wheel is braked and cannot rotate at all.

According to the invention, there is provided a wheel hub according to claim 1.

Fitting the manually operable device on the hub allows the wheel to be easily attached and reattached to the wheelchair frame without having to dismantle the mechanism which controls the wheel rotation.

The wheel hub is particularly intended for use on the wheels of a wheelchair. A hub will be fitted at the centre of each of the main driving wheels of the chair..

The ratchet arrangement produces a feature referred to as 'anti-rollback'. In other words, this position is engaged by the user when the wheelchair is going uphill and prevents the wheel chair from rolling back down the hill if the user stops turning the handwheels.

The selection of one of the three positions is preferably carried out by manipulating a selector mounted on the hub itself. The selector may be a rotatable disc mounted for rotation about an axis coincident with the hub axis. The selector may have a central position corresponding to the first operating position, with the second and third operating positions being reached by rotating the selector in one direction for the second operating position and in the opposite direction for the third operating position.

The disc can have a radially outwardly extending lever to enable it to be turned, or may have a circumferential surface modified to allow it to be gripped and turned. For example the surface may be provided with a rubber ring, or may be formed with a type of knurling or similar to increase grip.

The spindle is preferably provided with a mounting bracket by which it can be non-rotatably mounted on the wheelchair frame. This bracket may have axially extending pins or sockets which engage with axially extending sockets or pins on the. hub. The hub is preferably provided with a quick detachment mechanism enabling the hub (together with a wheel attached to the hub) to be quickly and easily detached from the wheelchair frame. The spindle may have a radial projection at its inner end which can be retracted to enable the spindle to be inserted in or withdrawn from the mounting bracket. When the projection is extended, relative axial movement between the spindle and the mounting bracket cannot take place, and when the pins and sockets are engaged with one another rotational movement between the spindle and the bracket cannot take place.

The manually operable device comprises a splined annular surface on the spindle surrounded by a body on the sleeve which has a recess in which the splined surface lies so that the body is free to rotate relative to the spindle, and to the splined surface on the spindle, when the hub takes up the first operating position, the device also including a first pin or pins, fixed against rotation relative to the sleeve, which can be moved from a retracted position into the path of relative rotational movement between the body and the splined annular surface to engage with the splines and to thus prevent rotation of the sleeve relative to the spindle (the second operating position) and a second pin or pins, also fixed against rotation relative to the sleeve, which can be moved into the path of relative rotational movement between the body and the splined annular surface, when the first pin or pins is in a retracted position, to engage with the splines and to prevent rotation of the sleeve in one rotational direction relative to the spindle but to allow rotation in the opposite rotation direction.

The first pin or pins may have square end profiles which engage between splines on the splined surfaces and the second pin or pins may have end profiles with one square face and one ramp face which engage between splines on the splined surfaces, so that the square face prevents rotation of the sleeve in one rotational direction relative to the spindle and the ramp face allows rotation in the opposite rotation direction. The first pin or pins are preferably diametrically opposite (referred to the spindle axis) to the second pin or pins.

In one embodiment, the body on the sleeve has radially extending passages communicating with the recess and the pins are radially movable pins which can move in and out of the recess to engage, one at a time, with the splined surface. The radially movable pins have lateral lugs which engage in cam tracks inside the selector so that movement of the selector in one rotational direction extends the first pins and movement in the opposite rotational direction extends the second pins.

In another embodiment, the body on the sleeve comprises a radially movable slide plate moving between two fixed parallel slide guides such that the plate can move radially but cannot rotate relative to the guides, the recess being provided in the slide plate and the pins being formed integrally with the plate at opposite regions of the circumference of the recess. Leaf springs mounted internally on the selector bias the opposite ends of the slide plate and, the slide plate ends and the leaf springs are designed so that movement of the selector in each direction causes the leaf springs to ride over a nose on the slide plate so that the selector is held in one or other end position until the selector is manually operated to a different position.

There may be two first pins and two second pins.

The invention also extends to a wheelchair wheel having a hub as set forth above, and to a wheelchair having wheels of this type.

The invention will now be further described, by way of example, with reference to the accompanying drawings, in which:
- Figure 1: is a side view, partly in section, of a hub in accordance with the invention;
- Figure 2: is an exploded view of a manually operable changing device forming part of the hub of Figure 1;
- Figure 3: is a side view of a spindle;
- Figure 4: is an end view of the spindle of Figure 3;
- Figure 5: is a side view of a mounting collar;
- Figure 6: is an end view of the collar of Figure 5;
- Figure 7: is a front view of a cover for the mechanism of Figure 2;
- Figure 8-: is a. cross-section through the cover of Figure 7;
- Figure 9: is an rear view of the cover shown in Figure 7, showing the interior of the cover;
- Figure 10: is a front view of a centre disc forming part of the mechanism of Figure 2;
- Figure 11: is a side view on the arrow A of the disc of Figure 10;
- Figure 12: shows a ratchet pin;
- Figure 13: is a top view of a lock pin;
- Figure 14: is a side view of the lock pin shown in Figure 13;
- Figure 15: is a perspective view, partly cut away, of a second embodiment of hub in accordance with the invention;
- Figure 16: is a plan view of the hub of Figure 15 showing additional components; and
- Figure 17: is an exploded view of a spindle for use with the hub of the invention.

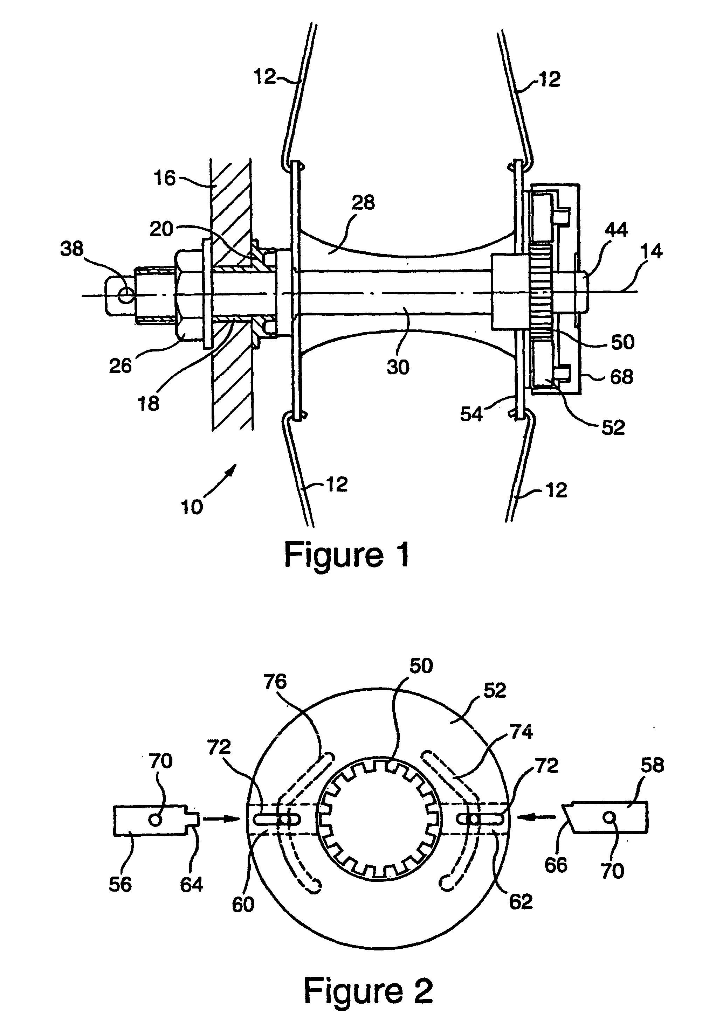

Figure 1 shows a hub assembly generally designated 10 with a hub body 28. The hub body is connected to a wheel rim (not shown) by spokes 12 in a conventional manner. The hub has an axis of rotation at 14, and is mounted for rotation relative to a wheelchair frame 16, only a small part of which is shown in the drawing.

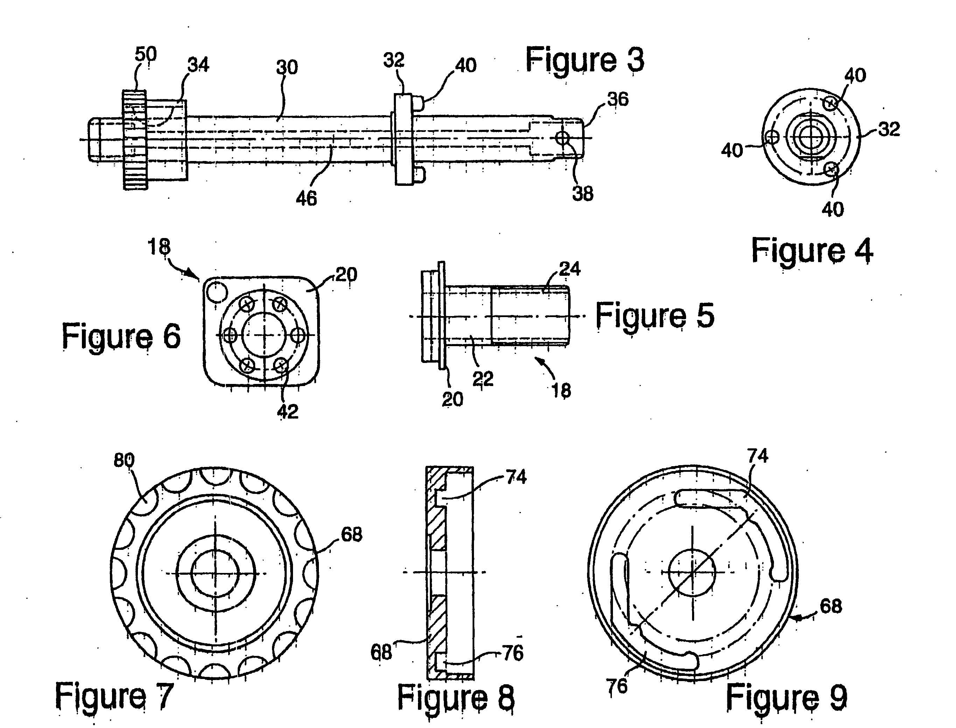

The hub assembly includes a collar 18 (Figures 5 and 6) with a shoulder 20, a hollow shaft 22 and a threaded region 24. The shaft 22 is passed through the wheelchair frame 16, and a nut 26 is tightened onto the threaded portion 24 to fix the collar 18 to the wheelchair frame 16.

As a separate component, the hub body 28 is fitted onto a spindle 30 (Figure 3) and secured on the spindle between a flange 32 and a nut 34. The body 28 has an integral bearing which allows the body to rotate relative to the spindle 30. The assembly of the wheel with spokes 12, body 28 and spindle 30 can then be mounted in the collar 18 by inserting the left hand end 36 of the spindle into the bore 22 of the collar. A spring loaded retention ball 38 can be pressed back into the spindle 30 to allow the spindle to pass through the bore 22. The spindle will be prevented from rotating relative to the collar 18 by the engagement of pins 40 on the shoulder 32 in holes 42 on the shoulder 20. There may be for example three pins 40 on the spindle and six holes 42 on the shoulder, so that the two can engage in a number of different angular positions.

The mechanism by which the wheel and the spindle can be withdrawn from the collar 18 is similar to that described in U.S. patent 5,727,850. A push button 44 on the end of a rod 46 can be pushed in to release radial pressure on the projecting retention ball 38, and whilst this pressure is maintained on the push button, the spindle 30 can be withdrawn from the collar 18.

The parts of the hub which control its operation will now be described.

A part 50 of the nut 34 has a raised circumference with a splined or castellated rim. When the nut 34 is tightened to secure the body 28, the nut 34 and the rim 50 are fixed to the spindle 30. An outer annular disc 52 (Figure 2) is fixed to the flange 54 of the hub body 28. Located in radial passages in the annular body 52 are two pins 56 and 58. One pin 56 is responsible for braking the wheel and the other pin 58 is responsible for providing an anti-rollback feature. The pins are diametrically opposite to one another.

Under normal conditions, both pins 56 and 58 are housed within their passages 60, 62 in the annular body 52 and provide no resistance to free relative rotation of the castellated rim 50 inside the body 52. The wheel is therefore free to rotate on its spindle in either direction.

In order to brake the wheel, the pin 56 has to move radially inwards so that its tip 64 engages between two of the castellations of the rim 50, and a spring is positioned behind the pin to drive the pin inwards. In this position, relative movement between the rim 50 and the body 52 is locked and there can then be no movement between the wheel and the spindle 30. In other words the wheel is fully braked.

If the pin 56 is withdrawn and in its place the pin 58 is driven inwards (likewise by a spring), then the shape of the tip 66 of the pin 58 engaging against the teeth 50 will allow rotation of the wheel in one direction, but will prevent rotation in the opposite direction, in the manner of a ratchet.

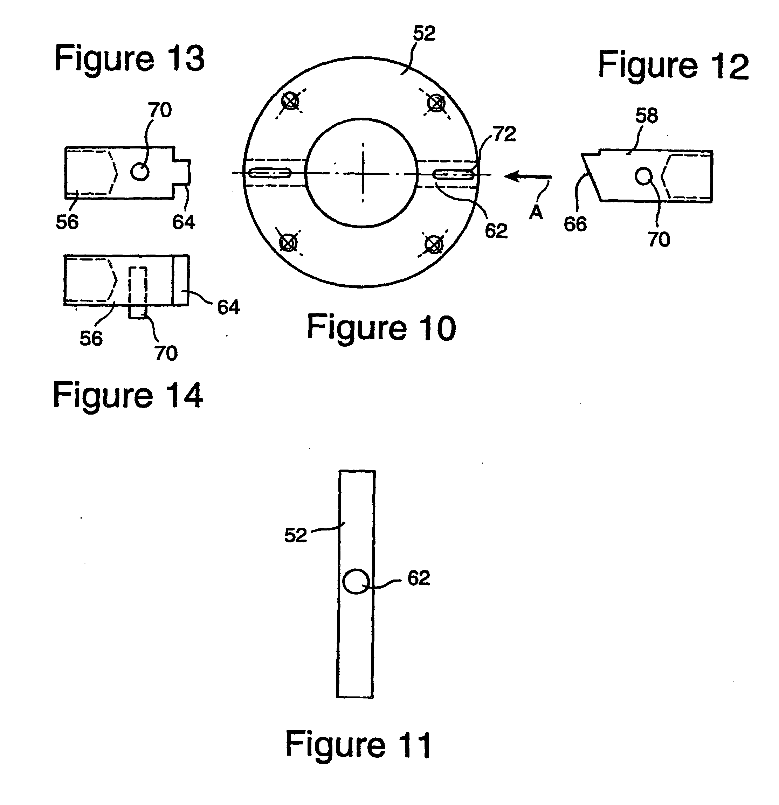

In order to move either one or the other of the pins 56, 58 in the manner described, a cover disc 68 is used. The pins 56, 58 are controlled by movable pegs 70 which extend axially through slots 72 through the walls of the passages 60, 62 and into the pins 56,58 (see Figure 14). The top ends of these pegs 70 engage in tracks 74, 76 on the inside of the cover disc 68. The location of these tracks 74, 76 is indicated in dotted lines in Figure 2 and can be seen clearly in Figures 8 and 9 which show the inside of the disc 68. It will be seen that the tracks 74, 76 have a centre position; extending in one direction from this centre position is a track region of constant radius and extending in the other direction is a track region where the radius of the track continually reduces.

Figure 2 illustrates the situation where the cover disc 68 is in its middle position relative to the annular body 52 and where the pins 56 and 58 are not activated. Turning the cover disc 68 in one direction relative to the annular body 52 causes one of the pegs 70 to move radially inwards and to force the corresponding pin 56, 58 inwards to engage with the teeth 50. Because the corresponding region of the opposite track is of constant radius, there is no effect on the position of the opposite pin.

Rotating the cover disc in the opposite direction however produces movement of the opposite pin.

Both pins 56 and 58 are spring-loaded in a radially inward direction, and are held out of engagement, against the spring pressure by the engagement of the pegs 70 in the tracks 74, 76.

On the outside of the cover disc 68, there is a scalloped rim 80 to allow the cover disc to be gripped by the user so that it can be turned either clockwise or anti-clockwise, depending on the function which is to be engaged. However the cover disc 60 has no projecting parts, so that braking and anti-rollback functions cannot be accidentally engaged.

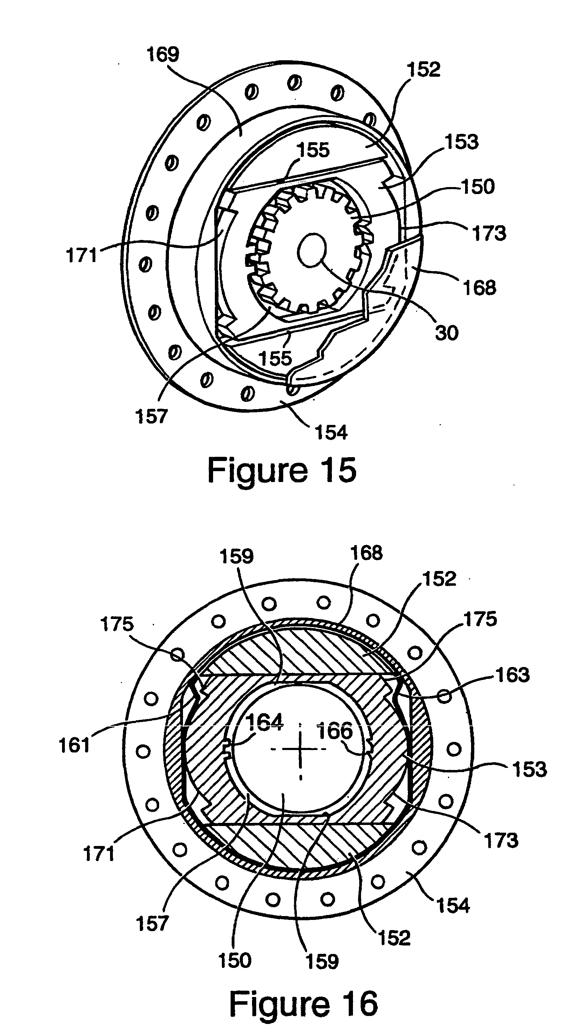

Figure 15 shows an alternative construction. In this embodiment, the annular disc 52 of Figure 2 is replaced by two diametrically opposite guide bodies 152 which have parallel guide surfaces 155 for a slidable lock member 153. The guide bodies 152 are fixed to, or are made integral with the flange 154 of the hub body. For example, the flange 154 and the guide bodies may be made as a single casting.

The lock member 153 has a central aperture 157 within which a splined wheel 150 (fast with the spindle 30,130) is received. In the middle position shown in Figure 16, the wheel 150, and thus the spindle on which it is mounted, is free to rotate relative to the flange 154/guide bodies 152.

The aperture 157 of the lock member has, at one point around its circumference, two square profile teeth 164, the profiles of these teeth matching the profiles of the splines on the wheel 150. At an opposite point, the lock member has two ratchet teeth 166. The aperture 157 has flattened portions at 159 which separate the two sets of teeth.

It will be clear from Figure 16 that the lock member can be moved to the right from its freewheeling position shown in the Figure until the teeth 164 engage the splines. The lock member will then be rotationally locked to the wheel 150 and the spindle 130. Attempted rotation of the spindle and splined wheel 150 will then also require rotation of the lock member, but such rotation will be blocked by abutment between the parallel surfaces of the lock member and the guide bodies 152. The wheel is therefore locked in this position.

In a similar manner, movement of the lock member 153 to the left will bring the ratchet teeth 166 into engagement with the splines of the wheel 150, and, as previously described, the engagement between the teeth and the splines will allow relative rotation in one direction but not in the opposite direction. Thus an anti-roll-back facility is achieved.

Movement of the lock member 153 is controlled by two leaf springs 161,163 and a cover 168. The leaf springs (which are not shown in Figure 15) are fixed on the inside of a rim 169 of the cover 168, are mirror images of one another and are stressed against the ends of the lock member 153. In the middle position shown in Figure 16, the springs are in balance, each exerting the same force on the lock member such that the lock member stays in its central position.

The end profiles 171,173 of the lock member 153 are designed to cooperate with the springs 161 so that
- as the cover is turned clockwise (Figure 16) a larger diameter part of the end profile 171 presses against the spring 161 which increase the pressure on the lock member pushing it to the right
- at the opposite end of profile 173, the spring 163 first rides over the nose 175 and then falls into a smaller diameter part of the end profile 173. The force being exerted by the spring 161 is thus greater than that exerted by spring 163, and the lock member is moved to the right into the locked or braking position.
- because the spring 163 has passed over the nose 175, the cover 168 and the lock member will be held in this position. To return to the middle position, rotational force has to be applied again to the cover to make the spring 163 ride back over the nose 175.

In order to achieve the anti-rollback position, the same sequence is followed, but the initial rotation of the cover 168 is in an anti-clockwise direction.

In comparison with the embodiment of Figures 2 and 10 to 14, this embodiment has fewer components and thus is easier and cheaper to both manufacture and assemble. The locking member 153 can be formed from an extrusion having a cross-sectional shape as shown, the locking members then constituting slices cut from the extruded length.

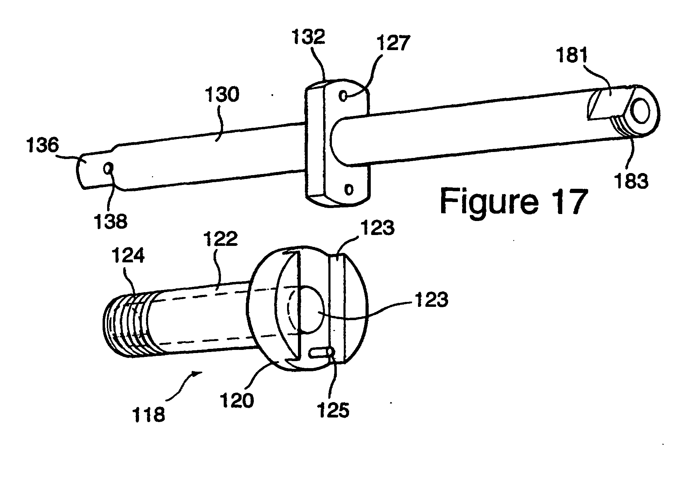

Figure 17 and 18 show a modified form of spindle 130. At the right hand end, the hollow spindle has a flat 181 onto which the splined wheel 150 is force-fitted. The D-shape ensures that there is no relative rotation between the wheel and the spindle. Instead of this shape, there could be mating splines on the end of the spindle 130 and on the internal diameter of the wheel 150. A short length of thread 183 is provided to enable a lock-nut to be fitted, if necessary.

The other end of the spindle fits within a bore 123 in a collar 118 which is of a similar form and function to the collar 18 which has already been described. The spindle has a shoulder 132 which mates with a socket 120 on the end of the collar. The socket has a diametral slot 123 which receives the shoulder 132. The slot 123 has an upstanding pin 125 and the shoulder has corresponding holes 127. When the collar and spindle are correctly assembled, the pin 125 locates in one of the holes 127. The pin and the holes can be off-centre, and the collars can be handed so that a heel intended for the right hand side of a wheelchair cannot be fitted to the left hand side, and vice versa.

## Claims

1. A wheel hub (10) which comprises a spindle (30), a sleeve (28) rotatable relative to the spindle, a bearing between the sleeve and the spindle to allow said relative rotation, and a manually operable device (50,52) which has three operating positions, a first of which allows free rotation between the spindle and the sleeve, a second of which locks the spindle to the sleeve to effect a braking action, and a third of which engages a ratchet arrangement (50,58) which allows the spindle to rotate relative to the sleeve in one direction only, **characterised in that** the manually operable device is fitted on the hub (10) and a splined annular surface (50) on the spindle surrounded by a body (52) on the sleeve which has a recess in which the splined surface lies so that the body (52) is free to rotate relative to the spindle (30) and the splined surface (50) on the spindle (30), when the hub (10) takes up the first operating position, the device also including a first pin or pins (56), fixed against rotation relative to the sleeve (28), which can be moved from a retracted position into the path of relative rotational movement between the body (52) and the splined annular surface (50) to put the hub (10) into the second operating position and to engage with the splines and to thus prevent rotation of the sleeve (28) relative to the spindle (30) and a second pin or pins (58), also fixed against rotation relative to the sleeve (28), which can be moved into the path of relative rotational movement between the body (52) and the splined annular surface (50), when the first pin or pins (56) is in a retracted position, to put the hub (10) into the third operating position and to engage with the splines and to prevent rotation of the sleeve (28) in one rotational direction relative to the spindle (30) but to allow rotation in the opposite rotation direction.

2. A wheel hub as claimed in Claim 1, wherein the selection of one of the three positions is carried out by manipulating a selector (52) mounted on the hub itself.

3. A wheel hub as claimed in Claim 2, wherein the selector is a rotatable disc (52) mounted for rotation about an axis coincident with the hub axis (14).

4. A wheel hub as claimed in Claim 3, wherein the selector (52) has a central position corresponding to the first operating position, with the second and third operating positions being reached by rotating the selector in one direction for the second operating position and in the opposite direction for the third operating position.

5. A wheel hub as claimed in Claim 3 or Claim 4, wherein the disc (52) has a radially outwardly extending lever to enable it to be turned.

6. A wheel hub as claimed in Claim 3 or Claim 4 wherein the disc (52) has a circumferential surface (80) modified to allow it to be gripped and turned.

7. A wheel hub as claimed in Claim 6, wherein the circumferential surface (52) is provided with a rubber ring.

8. A wheel hub as claimed in Claim 6, wherein the circumferential surface (52) is formed with a type of knurling or similar to increase grip.

9. A wheel hub as claimed in any preceding claim, adapted for use on the wheels of a wheelchair.

10. A wheel hub as claimed in Claim 9, wherein the spindle (30) is provided with a mounting bracket (18) by which it can be non-rotatably mounted on a wheelchair frame (16).

11. A wheel hub as claimed in Claim 10, wherein the bracket (18) has axially extending pins or sockets (42) which engage with axially extending sockets or pins (40) on the hub (10).

12. A wheel hub as claimed in any one of Claims 9 to 11, provided with a quick detachment mechanism (38,44) enabling the hub (10) to be quickly and easily detached from the wheelchair frame (16).

13. A wheel hub as claimed in Claim 12, wherein the quick detachment mechanism comprises a radial projection (38) at the inner end of the spindle (30), which projection can be retracted to enable the spindle to be inserted in or withdrawn from the mounting bracket (18).

14. A wheel hub as claimed in any preceding claim, wherein the first pin or pins (56) have square end profiles which engage between splines on the splined surfaces (50).

15. A wheel hub as claimed in Claim 14, wherein the second pin or pins (58) have end profiles with one square face and one ramp face which engage between splines on the splined surfaces (50), so that the square face prevents rotation of the sleeve in one rotational direction relative to the spindle (30)and the ramp face allows rotation in the opposite rotation direction.

16. A wheel hub as claimed in any preceding claim, wherein the first pin or pins (56) are diametrically opposite referred to the spindle axis to the second pin or pins (58).

17. A wheel hub as claimed in any preceding claim, wherein the body (52) on the sleeve has radially extending passages (60,62) communicating with the recess and the pins (56,58) are radially movable pins which can move in and out of the recess to engage, one at a time, with the splined surface (50).

18. A wheel hub as claimed in Claim 17 when dependent on Claim 2, wherein the radially movable pins (56,58) have lateral lugs (70) which engage in cam tracks (74,76) inside the selector (52) so that movement of the selector in one rotational direction extends the first pins (56) and movement in the opposite rotational direction extends the second pins (58).

19. A wheel hub as claimed in any one of Claims 1 to 16, wherein the body on the sleeve comprises a radially movable slide plate (153) moving between two fixed parallel slide guides (152) such that the plate can move radially but cannot rotate relative to the guides, the recess being provided in the slide plate and the pins (164,166) being formed integrally with the plate at opposite regions of the circumference of the recess.

20. A wheel hub as claimed in Claim 19 when dependent on Claim 2, wherein leaf springs (161,163) mounted internally on the selector bias the opposite ends of the slide plate (153) and the slide plate ends and the leaf springs are designed so that movement of the selector in each direction causes the leaf springs to ride over a nose (175) on the slide plate (153) so that the selector is held in one or other end position until the selector is manually operated to a different position.

21. A wheel hub as claimed in any preceding claim, wherein there are two first pins (164) and two second pins (166).

22. A wheelchair wheel having a hub as claimed in any preceding claim.

23. A wheelchair having wheels as claimed in Claim 22.

## Patentansprüche

1. Radnabe (10), welche einen Achszapfen (30) umfasst, eine Hülse (28), die relativ zu dem Achszapfen drehbar ist, ein Lager zwischen der Hülse und dem Achszapfen, um die relative Drehung zu ermöglichen, sowie eine manuell bedienbare Einrichtung (50, 52), welche drei Betriebsstellungen aufweist, wovon eine erste die freie Drehung zwischen dem Achszapfen und der Hülse gestattet, eine zweite den Achszapfen an der Hülse verriegelt, um einen Bremsvorgang zu bewirkten, und eine dritte eine Sperrklinkenanordnung (50, 58) in Eingriff bringt, welche die Drehung des Radzapfens relativ zu der Hülse in nur einer Richtung gestattet,
**dadurch gekennzeichnet,**
**dass** die manuell bedienbare Einrichtung an der Nabe (10) befestigt ist und eine mit Keilwellen versehene ringförmige Oberfläche (50) auf dem Achszapfen von einem Körper (52) auf der Hülse umgeben ist, welcher eine Aussparung aufweist, in welcher die Keilwellenoberfläche liegt, sodass sich der Körper (52) relativ zu dem Achszapfen (30) und der Keilwellenoberfläche (50) auf dem Achszapfen (30) frei drehen kann, wenn die Nabe (10) die erste Betriebsstellung annimmt, wobei die Einrichtung außerdem einen oder mehrere erste Bolzen (56) aufweist, der/die gegen Drehung in Bezug auf die Hülse (28) befestigt ist/sind, welche(r) aus einer zurückgezogenen Stellung in den Weg der relativen Drehbewegung zwischen dem Körper (52) und der ringförmigen Keilwellenoberfläche (50) hinein bewegt werden kann/können, um die Nabe (10) in die zweite Betriebsstellung zu bringen und mit den Keilwellen in Eingriff zu bringen und somit die Drehung der Hülse (28) relativ zu dem Achszapfen (30) zu verhindern, sowie einen oder mehrere zweite Bolzen (58), der/die ebenfalls gegen Drehung relativ zu der Hülse (28) befestigt ist/sind, welche(r) in den Weg der relativen Drehbewegung zwischen dem Körper (52) und der ringförmigen Keilwellenoberfläche (50) bewegt werden kann/können, wenn sich der erste Bolzen oder die Bolzen (56) in einer zurückgezogenen Stellung befindet/befinden, um die Nabe (10) in die dritte Betriebsstellung zu bringen und mit den Keilwellen in Eingriff zu bringen und die Drehung der Hülse (28) relativ zu dem Achszapfen (30) in einer Drehrichtung zu verhindern, eine Drehung in der entgegengesetzten Drehrichtung aber zu gestatten.

2. Radnabe nach Anspruch 1, bei welcher die Auswahl einer der drei Stellungen durch Manipulation einer an der Nabe selbst montierten Auswahlvorrichtung (52) erfolgt.

3. Radnabe nach Anspruch 2, bei welcher die Auswahlvorrichtung eine drehbare Scheibe (52) ist, die zur Drehung um eine mit der Nabenachse (14) zusammenfallende Achse gelagert ist.

4. Radnabe nach Anspruch 3, bei welcher die Auswahlvorrichtung (52) eine mittige Stellung aufweist, welche der ersten Betriebsstellung entspricht, wobei die zweite und die dritte Betriebsstellung erreicht werden, indem die Auswahlvorrichtung für die zweite Betriebsstellung in die eine Richtung und für die dritte Betriebsstellung in die entgegengesetzte Richtung gedreht wird.

5. Radnabe nach Anspruch 3 oder Anspruch 4, bei welcher die Scheibe (52) einen sich radial nach außen erstrekkenden Hebel aufweist, um die Drehung derselben zu ermöglichen.

6. Radnabe nach Anspruch 3 oder 4, bei welcher die Scheibe (52) eine Umfangsoberfläche (80) aufweist, welche modifiziert ist, um zu ermöglichen, diese zu greifen und zu drehen.

7. Radnabe nach Anspruch 6, bei welcher auf der Umfangsoberfläche (52) ein Gummiring vorgesehen ist.

8. Radnabe nach Anspruch 6, bei welcher die Umfangsoberfläche (52) mit einer Art Rändelung oder dergleichen versehen ist, um die Griffigkeit zu erhöhen.

9. Radnabe nach einem der vorhergehenden Ansprüche, welche zur Verwendung an den Rädern eines Rollstuhls angepasst ist.

10. Radnabe nach Anspruch 9, bei welcher der Achszapfen (30) eine Montagehalterung (18) aufweist, mit Hilfe welcher dieser undrehbar an einem Rollstuhlrahmen (16) montiert werden kann.

11. Radnabe nach Anspruch 10, bei welcher die Halterung (18) sich axial erstreckende Bolzen oder Buchsen (42) aufweist, welche in Eingriff mit sich axial erstreckenden Buchsen oder Bolzen (40) an der Nabe (10) stehen.

12. Radnabe nach einem der Ansprüche 9 bis 11, die mit einem Schnellspannmechanismus (38, 44) ausgestattet ist, welcher es möglich macht, die Nabe (10) schnell und einfach von dem Rollstuhlrahmen (16) zu lösen.

13. Radnabe nach Anspruch 12, bei welcher der Schnellspannmechanismus einen radialen Vorsprung (38) am inneren Ende des Achszapfens (30) umfasst, wobei dieser Vorsprung zurückgezogen werden kann, um das Einsetzen des Achszapfens in die Montagehalterung (18) oder das Herausziehen aus dieser zu ermöglichen.

14. Radnabe nach einem der vorhergehenden Ansprüche, bei welcher der erste oder die ersten Bolzen (56) rechtekkige Endprofile aufweisen, welche zwischen Keilwellen auf den Keilwellenoberflächen (50) eingreifen.

15. Radnabe nach Anspruch 14, bei welcher der zweite oder die zweiten Bolzen (58) Endprofile mit einer rechteckigen Stirnfläche und einer rampenartigen Stirnfläche aufweisen, welche zwischen Keilwellen auf den Keilwellenoberflächen (50) eingreifen, sodass die rechteckige Stirnfläche die Drehung der Hülse relativ zu dem Achszapfen (30) in der einen Drehrichtung verhindert und die Schrägfläche die Drehung in der entgegengesetzten Drehrichtung gestattet.

16. Radnabe nach einem der vorhergehenden Ansprüche, bei welcher der erste Bolzen oder die Bolzen (56) in Bezug auf die Radzapfenachse dem zweiten Bolzen oder den Bolzen (58) diametral gegenüberliegen.

17. Radnabe nach einem der vorhergehenden Ansprüche, bei welcher der Körper (52) an der Hülse sich radial erstreckende Durchführungen (60, 62) aufweist, die mit der Aussparung in Verbindung stehen, und wobei die Bolzen (56, 58) radial bewegbare Bolzen sind, welche sich in die Aussparung und aus dieser heraus bewegen können, um, jeweils einzeln, in die Keilwellenoberfläche (50) einzugreifen.

18. Radnabe nach Anspruch 17 wenn abhängig von Anspruch 2, bei welcher die radial bewegbaren Bolzen (56, 58) seitliche Nasen (70) aufweisen, welche in Nockenschlitzen (74, 76) an der Innenseite der Auswahlvorrichtung (52) eingreifen, sodass durch Bewegung der Auswahlvorrichtung in der einen Drehrichtung die ersten Bolzen (56) ausgefahren werden und durch Bewegung in der entgegengesetzten Drehrichtung die zweiten Bolzen (58) ausgefahren werden.

19. Radnabe nach einem der Ansprüche 1 bis 16, bei welcher der Körper auf der Hülse eine radial bewegbare Gleitplatte (153) umfasst, welche sich zwischen zwei feststehenden parallelen Gleitführungen (152) bewegt, sodass sich die Platte radial bewegen kann, aber nicht relativ zu den Führungen rotieren kann, wobei die Aussparung in der Gleitplatte vorgesehen ist und die Bolzen (164, 166) integral mit der Platte an gegenüberliegenden Bereichen des Umfangs der Aussparung ausgebildet sind.

20. Radnabe nach Anspruch 19 wenn abhängig von Anspruch 2, bei welcher Blattfedern (161, 163), die innen an der Auswahlvorrichtung montiert sind, die gegenüberliegenden Enden der Gleitplatte (153) vorspannen, und wobei die Enden der Gleitplatte und die Blattfedern derart gestaltet sind, dass eine Bewegung der Auswahlvorrichtung in der jeweiligen Richtung bewirkt, dass die Blattfedern über eine Nase (175) an der Gleitplatte (153) laufen, sodass die Auswahlvorrichtung in der einen oder anderen Endstellung gehalten wird, bis die Auswahlvorrichtung manuell in eine andere Stellung umgestellt wird.

21. Radnabe nach einem der vorhergehenden Ansprüche, bei welcher zwei erste Bolzen (164) und zwei zweite Bolzen (166) vorgesehen sind.

22. Rollstuhlrad mit einer Nabe nach einem der vorhergehenden Ansprüche.

23. Rollstuhl mit Rädern nach Anspruch 22.

## Revendications

1. Moyeu de roue (10) qui comprend une fusée (30), un manchon (28) pouvant pivoter par rapport à la fusée, un palier entre le manchon et la fusée pour permettre ladite rotation relative, et un dispositif pouvant être actionné manuellement (50, 52) qui a trois positions d'utilisation, dont une première qui permet la rotation libre entre la fusée et le manchon, une deuxième qui bloque la fusée sur le manchon pour exercer une action de freinage, et une troisième qui engage un assemblage à cliquets (50, 58) qui permet à la fusée de pivoter par rapport au manchon dans une seule direction, **caractérisé en ce que** le dispositif pouvant être actionné manuellement est fixé sur le moyeu (10), et une surface annulaire cannelée (50) sur la fusée entourée par un corps (52) sur le manchon qui a un évidemment dans lequel la surface cannelée est placée de telle sorte que le corps (52) soit libre de pivoter par rapport à la fusée (30) et la surface cannelée (50) sur la fusée (30) lorsque le moyeu (10) se place dans la première position d'utilisation, le dispositif incluant également une ou des premières broches (56), fixées pour empêcher la rotation par rapport au manchon (28), qui peuvent être déplacées depuis une position rétractée dans la trajectoire du mouvement de rotation relative entre le corps (52) et la surface annulaire cannelée (50) pour placer le moyeu (10) dans la deuxième position d'utilisation et pour s'engager dans les cannelures et pour empêcher ainsi la rotation du manchon (28) par rapport à la fusée (30), et une ou des deuxièmes broches (58), fixées également pour empêcher la rotation par rapport au manchon (28), qui peuvent être déplacées dans la trajectoire du mouvement de rotation relative entre le corps (52) et la surface annulaire cannelée (50) lorsque la ou les premières broches (56) sont en position rétractée, pour placer le moyeu (10) dans la troisième position d'utilisation et pour s'engager dans les cannelures et pour empêcher la rotation du manchon (28) dans une direction de rotation par rapport à la fusée (30) mais pour permettre la rotation dans la direction de rotation opposée.

2. Moyeu de roue selon la revendication 1, dans lequel la sélection de l'une des trois positions est effectuée en manipulant un sélecteur (52) monté sur le moyeu lui-même.

3. Moyeu de roue selon la revendication 2, dans lequel le sélecteur est un disque rotatif (52) monté de façon à pivoter autour d'un axe coïncidant avec l'axe du moyeu (14).

4. Moyeu de roue selon la revendication 3, dans lequel le sélecteur (52) a une position centrale correspondant à la première position d'utilisation, les deuxième et troisième positions d'utilisation étant atteintes en faisant pivoter le sélecteur dans une direction pour la deuxième position d'utilisation et dans la direction opposée pour la troisième direction d'utilisation.

5. Moyeu de roue selon la revendication 3 ou 4, dans lequel le disque (52) a un levier s'étendant radialement vers l'extérieur pour lui permettre d'être tourné.

6. Moyeu de roue selon la revendication 3 ou 4, dans lequel le disque (52) a une surface circonférentielle (80) modifiée pour lui permettre d'être empoigné et tourné.

7. Moyeu de roue selon la revendication 6, dans lequel la surface circonférentielle (52) est munie d'une bague en caoutchouc.

8. Moyeu de roue selon la revendication 6, dans lequel la surface circonférentielle (52) est formée d'un genre de moletage ou similaire afin d'accroître la prise en main.

9. Moyeu de roue selon l'une quelconque des revendications précédentes, adapté pour être utilisé sur les roues d'un fauteuil roulant.

10. Moyeu de roue selon la revendication 9, dans lequel l'axe (30) est muni d'un support de montage (18) grâce auquel il peut être monté de manière non rotative sur le châssis (16) d'un fauteuil roulant.

11. Moyeu de roue selon la revendication 10, dans lequel le support (18) a des broches ou des douilles (42) s'étendant axialement qui s'engagent dans des douilles ou broches (40) s'étendant axialement sur le moyeu (10).

12. Moyeu de roue selon l'une quelconque des revendications 9 à 11, muni d'un mécanisme de détachement rapide (38, 44) permettant au moyeu (10) d'être détaché rapidement et facilement du châssis (16) du fauteuil roulant.

13. Moyeu de roue selon la revendication 12, dans lequel le mécanisme de détachement rapide comprend une projection radiale (38) à l'extrémité intérieure de la fusée (30), laquelle projection peut être rétractée pour permettre à la fusée d'être insérée dans le support du montage (18) ou d'en être retiré.

14. Moyeu de roue selon l'une quelconque des revendications précédentes, dans lequel la ou les premières broches (56) ont des profils d'extrémité carrés qui s'engagent entre les cannelures des surfaces cannelées (50).

15. Moyeu de roue selon la revendication 14, dans lequel la ou les deuxièmes broches (58) ont des profils d'extrémité avec une face carrée et une face inclinée qui s'engagent entre des cannelures sur les surfaces cannelées (50), de sorte que la face carrée empêche la rotation du manchon dans une direction de rotation par rapport à la fusée (30) et que la face inclinée permette la rotation dans la direction de rotation opposée.

16. Moyeu de roue selon l'une quelconque des revendications précédentes, dans lequel la ou les premières broches (56) sont diamétralement opposées à la ou aux deuxièmes broches par rapport à l'axe de la fusée.

17. Moyeu de roue selon l'une quelconque des revendications précédentes, dans lequel le corps (52) sur le manchon a des passages (60, 62) s'étendant radialement communiquant avec l'évidement, et les broches (56, 58) sont des broches mobiles radialement qui peuvent être insérées et retirées de l'évidemment pour s'engager, l'une après l'autre, avec la surface cannelée (50).

18. Moyeu de roue selon la revendication 17 lorsqu'elle dépend de la revendication 2, dans lequel les broches mobiles radialement (56, 58) ont des tenons latéraux (70) qui s'engagent dans des rampes de guidage (74, 76) à l'intérieur du sélecteur (52) de sorte qu'un mouvement du sélecteur dans une direction de rotation étend les premières broches (56) et qu'un mouvement dans la direction de rotation opposée étend les deuxièmes broches (58).

19. Moyeu de roue selon l'une quelconque des revendications 1 à 16, dans lequel le corps sur le manchon comprend une plaque coulissante (153) mobile radialement se déplaçant entre deux guides coulissants (152) parallèles fixes de sorte que la plaque puisse se déplacer radialement mais ne puisse pas pivoter par rapport aux guides, l'évidemment étant fourni dans la plaque coulissante et les broches (164, 166) étant formées en un tenant avec la plaque à des régions opposées de la circonférence de l'évidemment.

20. Moyeu de roue selon la revendication 19 lorsqu'elle dépend de la revendication 2, dans lequel des ressorts à lames (161, 163) montés à l'intérieur sur le sélecteur dévient les extrémités opposées de la plaque coulissante (153), et les extrémités de la plaque coulissante et les ressorts à lames sont conçus de sorte que le mouvement du sélecteur dans chaque direction fasse passer les ressorts à lames par dessus un bec (175) sur la plaque coulissante (153) de sorte que le sélecteur soit maintenu dans l'une ou l'autre position d'extrémité jusqu'à ce que le sélecteur soit actionné manuellement vers une autre position.

21. Moyeu de roue selon l'une quelconque des revendications précédentes, dans lequel il y a deux premières broches (164) et deux deuxièmes broches (166).

22. Roue pour fauteuil roulant ayant un moyeu selon l'une quelconque des revendications précédentes.

23. Fauteuil roulant ayant des roues selon la revendication 22.
